**Europäisches Patentamt**

**European Patent Office**

**Office européen des brevets**

(19)

(11) Veröffentlichungsnummer : **0 436 052 B1**

(12)

# EUROPÄISCHE PATENTSCHRIFT

(45) Veröffentlichungstag der Patentschrift :
**23.09.92 Patentblatt 92/39**

(51) Int. Cl.$^5$ : **G01C 19/72**

(21) Anmeldenummer : **90100103.2**

(22) Anmeldetag : **03.01.90**

(54) Faseroptisches Sagnac-Interferometer mit digitaler Phasenrampenrückstellung zur Drehratenmessung.

(43) Veröffentlichungstag der Anmeldung :
**10.07.91 Patentblatt 91/28**

(45) Bekanntmachung des Hinweises auf die
Patenterteilung :
**23.09.92 Patentblatt 92/39**

(84) Benannte Vertragsstaaten :
**DE ES FR GB IT NL SE**

(56) Entgegenhaltungen :
**EP-A- 0 168 292**
**EP-A- 0 294 915**
**EP-A- 0 359 666**
**GB-A- 2 152 207**

(73) Patentinhaber : **LITEF GmbH**
**Lörracher Strasse 18**
**W-7800 Freiburg/Br. (DE)**

(72) Erfinder : **Gröllmann, Peter, Dipl.-Ing.**
**Feldbergstrasse 24L**
**W-7800 Freiburg i.Br. (DE)**

(74) Vertreter : **TER MEER - MÜLLER -**
**STEINMEISTER & PARTNER**
**Mauerkircherstrasse 45**
**W-8000 München 80 (DE)**

**Beschreibung**

Die Erfindung betrifft ein faseroptisches Sagnac-Interferometer zur Drehratenmessung, bei dem zwei aus einer Lichtquelle stammende, durch Strahlteilung erzeugte Lichtstrahlen in entgegengesetzten Richtungen in eine Faserspule eingestrahlt und anschließend wiedervereinigt werden, bei dem das entstehende Interferenzbild durch eine Detektoreinrichtung abgetastet wird, deren Ausgangssignal der Lichtintensität des Interferenzbildes entspricht, bei dem die beiden Lichtstrahlen mittels eines in der Faserspule liegenden Phasenmodulators durch ein periodisches, aus mehreren variablen Signalanteilen zusammengesetztes Rechtecksignal mit der Grundfrequenz $f_0 = 1/2t_0$, wobei $t_0$ der Laufzeit jedes der Lichtstrahlen durch die Faserspule entspricht, moduliert werden, und wobei ein erster Signalanteil bei periodischem Modulationshubwechsel zwischen zwei Betriebsmodi im Takt der Frequenz $f_0$ eine reziproke alternierende Phasenverschiebung der beiden gegenläufigen Lichtstrahlen bewirkt und wobei weiter ein zweiter Signalanteil ein stufenförmiges Rampensignal ist, dessen Stufen jeweils eine der Laufzeit $t_0$ bzw. ganzzahligen Vielfachen von $t_0$ entsprechende Dauer und Amplitudeninkremente aufweisen, welche nicht-reziproke inkrementale Phasenverschiebungen der beiden Lichtstrahlen kompensieren, bei dem das verstärkte Photodetektorausgangssignal einem mit der Frequenz $f_0$ getakteten ersten Synchrondemodulator zugeführt wird, bei dem das demodulierte und verstärkte Ausgangssignal einem Analog/Digital-Wandler zugeführt und nach Digitalisierung in einen digitalen Integrator integriert und mit nicht-reziproken Phasenverschiebungen der Lichtstrahlen über den zweiten Signalanteil kompensierender Phase über einen Digital/Analog-Wandler und einen Treiberverstärker den Phasenmodulator beaufschlagt, bei dem eine Skalenfaktorkorrekturschaltung vorgesehen ist, die das verstärkte Photodetektor-Ausgangssignal im Takt der Modusumschaltung demoduliert und über einen integrierenden Verstärker ein analoges Skalenfaktor-Korrektursignal an den Digital/Analog-Wandler abgibt und bei dem ein vom Quarzoszillator getakteter Prozessor die Steuer- und Synchronisationssignale für den ersten Synchrondemodulator, den Analog/Digital-Wandler und den digitalen Integrator liefert.

Zum Messen nichtreziproker Phasenverschiebungen in einem faseroptischen Sagnac-Interferometer, auch Ringinterferometer genannt, ist es aus der Druckschrift DE-Al-3l 44 l62 bekannt, im Bereich eines Eingangs der Faserspule liegenden Phasenmodulator einerseits mit einem mit der Frequenz $f_0 = 1/2t_0$ umschaltbaren Phasenhub bestimmter Amplitude und andererseits mit einer den Phasenhub ebenfalls verschiebenden Sägezahnspannung zur Nachregelung der nichtreziproken Phasenverschiebungen, z. B. aufgrund von Drehraten, zu beaufschlagen, wobei mit $t_0$ die Laufzeit jedes der Lichtstrahlen durch die Faserspule bezeichnet ist. Die Steigung der kompensierenden oder rückstellenden Sägezahnspannung (Phasen rampe) entspricht der Drehrate, ist also proportional zu $\Delta\varphi_0/t_0$, wobei mit $\varphi_0$ die nichtreziproke Phasenverschiebung, beispielsweise verursacht durch eine Drehbewegung, bezeichnet ist. In der Praxis jedoch ist das in der genannten DE-Druckschrift beschriebene, sogenannte Phasenrampen-Rückstellverfahren kaum brauchbar, weil für inertiale Drehratenmessungen Genauigkeiten, insbesondere hinsichtlich der umschaltbaren Phasenhübe, der Amplitude bzw. Steigung des Rückstellsignals sowie des Proportionalitäts- oder Skalenfaktors verlangt werden, die sich in analoger Schaltungstechnik nicht gewährleisten lassen.

Mit der US-A-4 705 399 ($\hat{=}$ EP-Al-0 l68 292) ist eine bemerkenswerte Weiterentwicklung des in der genannten DE-Druckschrift grundsätzlich beschriebenen Rampenrückstellverfahrens für faseroptische Ringinterferometer bekannt geworden, das hinsichtlich der Signalauswertung und -aufbereitung vollständig digital arbeitet, so daß sich die erforderliche Signalpräzision insbesondere hinsichtlich der Genauigkeit der umschaltbaren Phasenhübe und des Rampen-Rückstellsignals mit eindeutiger Zuordnung einer automatischen Meßbereichumschaltung sowie einer Korrektur der Skalenfaktoren gewinnen lassen. Anhand der Fig. l4, die - in vereinfachter Darstellung - dem Stand der Technik nach Fig. l4 der genannten Druckschrift US-A-4 705 399 entspricht (vgl. auch H.C. Lefévre et al. in Integrated Optics: "A practical solution for the Fiber-Optic Gyroscope", SPIE Vol. 7l9, Fiber Optic Gyros, l986), wird zunächst das Funktionsprinzip des digitalen Phasenrampenrückstellverfahrens für faseroptische Drehratensensoren nach dem Stand der Technik erläutert, wobei hinsichtlich der Einzelheiten auf die genannte Literatur verwiesen wird:

Die schematische Darstellung der Fig. l4 eines dem genannten Stand der Technik entsprechenden Sagnac-Interferometers mit geschlossener Faserschleife zeigt eine Lichtquelle L, beispielsweise einen Laser, dessen parallele Lichtstrahlen, über einen Strahlteiler STl in zwei Lichtstrahlen aufteilt, in entgegengesetzter Richtung in eine Interferometer-Faserspule FS eingestrahlt werden. Die Faserspule FS wird vorzugsweise aus einer optischen Monomodefaser bestehen. Der Strahlteiler STl wirkt gleichzeitig als Mischer zur Rekombination der beiden Lichtstrahlen nach Durchlaufen der Faserspule FS. Das Interferenzsignal der beiden überlagerten Lichtrahlen gelangt über den zweiten Strahlteiler ST2 und dessen Ausgangszweig AUS auf einen Photodetektor PD, der die Intensität des Interferenzbildes abtastet. Wird mit $\Delta\varphi_0$ die Phasendifferenz zwischen den beiden sich in entgegengesetzten Richtungen in der geschlossenen Faserspule FS ausbreitenden Lichtstrahlen bezeichnet, so gilt, solange keine nichtreziproken Störungen vorliegen: $\Delta\varphi_0 = 0$. Hinsichtlich des mathematischen Zusammenhangs zwischen der Phasendifferenz $\Delta\varphi_0$ und der Drehrate oder Drehgeschwindigkeit, der optischen Leistungsdichte am Eingang des Photodetektors PD und der Meßempfindlichkeit wird auf die genannte Literatur verwiesen. Dort ist auch beschrieben, wie die Empfindlichkeit des Interferometers durch Beaufschlagung der beiden gegenläufigen Lichtstrahlen in der Faserspule FS durch Einführung eines konstanten, nichtreziproken Bias erhöht werden kann, und zwar so, daß mittels eines Phasenmodulators PM die beiden gegenläufigen Lichtstrahlen (Lichtwellen) periodisch in den Arbeitspunkt höchster Empfindlichkeit des Interferometers um Winkel von $(2n + I)\, \pi/2$ verschoben werden, wobei n eine ganze Zahl ist. Zu diesem Zweck wird der Phasenmodulator PM also zunächst mit einem Signal $\varphi_I(t)$ erregt, das eine periodische Phasenverschiebung von beispielsweise $\pm\, \pi/2$, $3/2\pi$, ..., bewirkt und dessen Periode $2t_0$ beträgt, wobei mit $t_0$ die Laufzeit einer Lichtwelle in der Faserspule FS bezeichnet ist.

Bei der Schaltung nach Fig. I4 werden, wie in der genannten US-Patentschrift beschrieben, nichtreziproke Phasenverschiebungen durch eine negative Rückkopplung auf den Phasenmodulator PM kompensiert durch ein sogenanntes Phasenrampensignal, dessen Steigung proportional ist zu $\Delta\varphi/t_0$, d. h. zu $\Delta\varphi$, also der nichtreziproke Phasenverschiebung. Das rückstellende Phasenrampensignal ist bei der Schaltung nach Fig. I4 ein Sägezahn- oder Treppenstufensignal, bei dem die Amplitude eines Sägezahns bzw. die Höhe einer Treppenstufe gleich $\Delta\varphi$ beträgt, während die Dauer eines Sägezahns oder einer Treppenstufe der Laufzeit $t_0$ bzw. einem ganzzahligen Vielfachen von $t_0$ entspricht.

Dieses in der Literatur, insbesondere der genannten US-A-4 705 399 beschriebene digitale Phasenrampenprinzip hat gegenüber einer analogen Lösung den entscheidenden Vorteil, daß die Skalenfaktoren des Phasenmodulationssteuersignals und des Phasenrampenrückstellsignals wenigstens im Prinzip korrigiert sind und eine präzise Definition der Sägezahnamplituden des Rückstellsignals gewährleistet ist.

Die Funktion der Schaltung nach Fig. I4 ist zur Erzeugung einer den Arbeitspunkt optimierenden reziproken, alternierenden Phasenverschiebung im Takt der Frequenz $f_0$ sowie des stufenförmigen Rampenrückstellsignals einschließlich einer Skalenfaktorregelung wird nachfolgend kurz beschrieben:

Das Ausgangssignal VD des Photodetektors PD wird über einen Impedanzwandler und Verstärker $A_0$ angehoben, dessen Ausgangssignal VD′ einen Synchrondemodulator SYNCD speist, der auf die Abtastfrequenz $f_0 = I/2t_0$ synchronisiert ist. Das demodulierte Ausgangssignal gelangt über einen in der Regel mit einem Filter kombinierten Verstärker A als Signal VA auf einen Analog/Digital-Wandler AD, dessen digitales Ausgangssignal proportional ist zur Drehrate und eine Vorzeicheninformation hinsichtlich der Drehrichtung enthält. Das Signal VAD gelangt sodann auf eine Schaltung GSC, die im wesentlichen einen digitalen Integrator beinhaltet und ein zusammengesetztes Phasensteuersignal VSC liefert, als zusammengesetztes Signal bestehend aus dem digitalen Phasenrampen-Rückstellsignal und dem digitalen Phasenmodulationssignal. Das zusammengesetzte Digitalsignal VSC wird anschließend in einem Digital/Analog-Wandler DA in eine analoge Steuerspannung VC gewandelt und über einen Treiberverstärker AP als Steuerspannung auf den Phasenmodulator PM gegeben.

Die Schaltung GSC zur Erzeugung des Signals VSC umfaßt einen ersten Speicher $M_I$ zur Zwischenspeicherung des Digitalsignals VAD, dessen zwischengespeicherte Ausgangssignale $SM_I$ auf einen ersten Eingang $e_I$ eines Addierers ADD gelangen, der in Kaskade mit einem zweiten Speicher $M_2$ verbunden ist. Die im zweiten Speicher $M_2$ zwischengespeicherten Ausgangssignale VSC werden auf einen zweiten Eingang $e_2$ des Addierers ADD rückgeführt und zum Digitalwert des Drehratensignals hinzuaddiert. Das Ausgangssignal SADD des Addierers ADD entspricht damit dem Drehwinkel.

Die soweit beschriebene Schaltung zur Erzeugung des Phasenmodulationssignals und des Phasenrampen-Rückstellsignals wird von einem Zentralprozessor CPU über einen bidirektionalen Bus BC synchronisiert und gesteuert, der mit einem quarzstabilisierten Oszillator OSC verbunden ist, der die Frequenz $f_0$ liefert.

Abgesehen von der auf einen bestimmten Drehwinkel, z. B. vier Bogensekunden, bezogenen Anzahl von Bits pro Wort, die der Kapazität des Addierers ADD entsprechen, liefert letzterer ein Überlaufsignal an einem Ausgang SL über den Bus BC an den Zentralprozessor CPU. In Abhängigkeit von den Überlaufsignalen des Addierers und in Übereinstimmung mit dem Taktsignal des Oszillators OSC generiert der Zentralprozessor CPU die verschiedenen Steuer- und Synchronisationssignale, wobei, um eine Skalenfaktorkorrektur zu ermöglichen, in Abhängigkeit vom Überlauf des Addierers ADD der Modulationshub zwischen einem "Modus A" und einem "Modus B" umgeschaltet wird, derart, daß für den Modus A ein Modulationshub von beispielsweise $\pm$ $\pi/2$ und für den Modus B ein Modulationshub von $\pm\, 3/2\pi$ gilt. Wie in der genannten Literatur beschrieben, sind die detektierten Amplitudendifferenzen zwischen den Betriebszuständen mit unterschiedlichen Modulationshüben ein Maß für den Skalenfaktorfehler zu den Zeitpunkten des Phasenrampensignalüberlaufs. Um diesen Skalenfaktorfehler zu korrigieren, ist die bekannte Schaltung nach Fig. I4 mit einem Demodulator SFC ausgestattet, der die Amplitudenunterschiede des $f_0$-Modulationssignals im Modus A (Phasenhub z. B. $\pm\, \pi/2$) und Modus B (Phasenhub z. B. $\pm\, 3/2\pi$) erfaßt und dieses demodulierte Signal über einen integrierenden Verstärker IA als analoges Korrektursignal SIA auf einen korrigierenden Analogeingang $e_M$ des Digital/Analog-Wandlers DA gibt.

Dieses soweit anhand der Fig. I4 kurz beschriebene Funktionsprinzip des digitalen Phasenrampen-Rückstellverfahrens für faseroptische Drehratensensoren, bei dem die Steigung der Phasenrampe ein Maß für die rückgestellte Drehrate ist und bei dem in der Rücksprungphase zur Gewinnung eines Korrektursignals für den Skalenfaktor eine Umschaltung des Modulationshubs im Verhältnis I:3 erfolgt, führt in der Praxis des Betriebs von solchen inertialen Drehratenmeßeinrichtungen zu erheblichen Schwierigkeiten aus folgenden Gründen:

Die Umschaltung von "Modus A" auf "Modus B" ist direkt abhängig vom Rampenwert des rückstellenden Sägezahnsignals und damit vom Drehwinkel des Kreisels. Ein Rampendurchlauf kann dabei einem Winkelinkrement von beispielsweise ca. vier Bogensekunden entsprechen. Die Modulationshubumschaltung bewirkt aber über die Verdreifachung der Amplitude des Modulationssignals und über Einstreuungen desselben in den empfindlichen Signalpfad des Photodetektorsignals VD effektiv eine Umschaltung des Kreiselbias. Diese unerwünschten Einstreueffekte sind in der Schaltung nach Fig. I4 durch gestrichelte Linie und den Kopplungsfaktor K angedeutet. Da diese Umschaltung des Modulationshubsignals aber drehwinkelabhängig ist, führt sie zu einem Unempfindlichkeitsbereich ("lock-in") des Kreisels. Es läßt sich auch, wie nachfolgend erläutert, zeigen, daß dieser Effekt außerhalb der Lock-in-Zone zu einer Skalenfaktor-Nichtlinearität führt.

Wie in Fig. I3 der Druckschrift US-A-4 705 399 gezeigt, ergibt sich bei Vorliegen eines Skalenfaktorfehlers eine unterschiedliche mittlere Intensität I des Photodetektorsignals VD bei Modulationshüben des Modus A bzw. den Modulationshüben des Modus B. Diese Intensitätsdifferenz wird im integrierenden Verstärker IA aufintegriert und liefert das analoge Korrektursignal am Eingang $e_M$ des Digital/Analog-Wandlers DA. Die Intensitätswechselfrequenz ist gleich der Wechselfrequenz von Modus A auf Modus B und somit gleich der Rampensignal-Rücksprungfrequenz, da die Umschaltung z. B. von Modus A auf Modus B durch Rampenüberlauf, d. h. das Signal SL des Addierers ADD, entsteht. Diese Wechselfrequenz ist drehratenproportional, d. h. gemäß dem in der genannten US-Patentschrift erläuterten Beispiel entspricht ein Rücksprung von $2\pi$ einem Winkelinkrement von 5 Bogensekunden; bei I Hz Rücksprungfrequenz entspricht dies einer Drehrate von 5°/h.

Bei kleinen Drehraten kann diese Wechselfrequenz beliebig klein werden, weshalb der integrierende Verstärker IA nur selten die Intensitätsunterschiedinformation erhält. In den dann beliebig langen Intervallen, in denen der Modus nicht wechselt, fehlt dem integrierenden Verstärker IA diese Information, und jeder kleine elektrische Nullpunktfehler an seinem Eingang läßt seine Ausgangsgröße, also das Skalen faktorkorrektursignal SIA weglaufen (driften). Aus diesem Grund ist der Skalenfaktor bei niedrigen Drehraten anfällig gegen Driften des integrierenden Verstärkers IA. Zwar ist der durch Skalenfaktordriften hervorgerufene prozentuale Drehratenfehler, ausgedrückt in absoluten Drehratenwerten, bei niedrigen Drehraten klein. Problematisch wird aber vor allem ein plötzliches starkes Ansteigen der Drehrate, da dann der Skalenfaktor noch "falsch" ist und somit auch hohe absolute Drehratenfehler entstehen, zumindest so lange, bis der Skalenfaktorregelkreis wieder im eingeschwungenen Zustand ist.

Es wäre nun naheliegend, die elektromagnetischen Einstreuungen (Störungen mit einem Koppelfaktor K; siehe Fig. I4) durch EMV-Maßnahmen (EMV = elektro-magnetische Verträglichkeit; englisch: EMC measures, electro-magnetic compatibility), also insbesondere durch Abschirmungen (in Fig. I4 angedeutet durch Abschirmung der Verbindungsleitung vom Treiberverstärker AP zum Phasenmodulator PM) und den Einbau von Filtern in Signal- und Spannungszuführleitungen beseitigen oder zumindest vermindern zu wollen. Bei dem bekannten Interferometeraufbau nach Fig. I4 ergibt sich jedoch eine spezielle EMV-Problematik: Das Signal VSC bzw. VC, VC′ beinhaltet die Modulationsfrequenz $f_0 = I/2t_0$, die im Oszillator OSC bzw. über den Prozessor CPU erzeugt wird. Das Photodetektorsignal VD beinhaltet aber die Drehrateninformation mit derselben Frequenz und Phasenlage. Dieses Signal wird im Synchrondemodulator SYNCD detektiert. Die Schaltungsgruppen, die die Modulationsgröße der Frequenz $f_0$ erzeugen, und die Schaltungsteile, die das drehratenempfindliche Signal gleicher Frequenz führen, stehen in engem räumlichem Zusammenhang und müssen in aller Regel aus einer gemeinsamen Stromversorgungseinrichtung gespeist werden. Damit ist die Gefahr der Einstreuung von elektromagnetischer Energie der Frequenz $f_0$ in den empfindlichen Signalpfad (Signal VD) offenkundig. Sperrfilter für $f_0$ in den Signalleitungen sind nicht möglich, da die gewünschte Signalinformation bei eben dieser Frequenz vorliegt. Unerwünschte Einstreuungen können also z. B. nur durch Abschirmung des Verstärkers $A_0$ und des Synchrondemodulators SYNCD gegen den Rest der Schaltung sowie durch Filterung ihrer Stromzuführung in einem gewissen Umfang vermindert werden.

Ein Zahlenbeispiel für die Einstreuempfindlichkeit wird die besondere Problematik für den Fachmann sofort verdeutlichen: Der Spektralanteil mit der Frequenz $f_0$ im Signal VC bzw. VC′ liegt im allgemeinen im Bereich von einigen V. Im Drehratensignal VD dagegen entsprechen - je nach Lichtleistung, Detektorempfindlichkeit und Kreiselskalenfaktor - Spannungen im Bereich einiger nV einer Drehrate von I°/h. Bei derart großen Amplitudenunterschieden wird ein unerwünschter Einstreupfad trotz aller möglicher EMV-Maßnahmen unvermeidlich sein, wie dies in Fig. I2 durch den Koppelfaktor K zwischen den Signalen VC, VC′ und VD symbolisiert ist; natürlich mit unterschiedlichen Einstreuamplituden und damit unterschiedlichen drehratenäquivalenten Fehlern im Signal VD, und zwar abhängig vom Betriebszustand Modus A bzw. B, da letzterer voraussetzungsgemäß eine dreifach höhere Modulationsamplitude als ersterer aufweist und somit eine stärkere Einstreuung bewirkt. Diese unterschiedlichen Einstreuamplituden führen, auf Drehraten bezogen, zu unterschiedlichen Kreiselnullpunktfehlern, die als Biase $B_a$ bzw. $B_b$ bezeichnet werden, je nach momentanem Modulationszustand Modus A bzw. Modus B.

Über den geschlossenen Regelkreis wird damit die Rampensteigung des Rückstellsignals proportional zur Summe der wahren Eingangsdrehrate $D_e$ und des jeweiligen Bias $B_a$ bzw. $B_b$ geregelt, je nachdem, ob Modulationsmodus A bzw. B vorliegt.

In Fig. I der beigefügten Zeichnungen ist ein Beispiel dargestellt, bei dem $D_e + B_a > 0$, $D_e + B_b > 0$ und $B_a > B_b$ gilt, also unterschiedliche Biases $B_a$ bzw. $B_b$ vorliegen. Wird $D_e$ = const. angenommen, so ergeben sich unterschiedliche Rampensteigungen, je nachdem, ob momentan Modus A bzw. Modus B vorliegt, da die Rampensteigung proportional zu $D_e + B_a$ bzw. proportional zu $D_e + B_b$ geregelt wird.

In dem in Fig. I dargestellten Beispiel ist die Steigung während des Modus B flacher als im Modus A, da $B_b < B_a$ vorausgesetzt wird. Somit wird die Verweildauer $t_b$ im Modus B gegenüber der Verweildauer $t_a$ im Modus A größer als dies bei modusunabhängigen Biases ($B_a = B_b$) der Fall wäre. Da jedoch nicht nur $B_a$, $B_b$, sondern auch die Eingangsdrehrate $D_e$ die Rampensteigung in beiden Modi beeinflußt, hängt das Tastverhältnis der Modi ($T_a/T_b$) auch von $D_e$ ab. Daraus folgt die oben angesprochene Skalenfaktornichtlinearität.

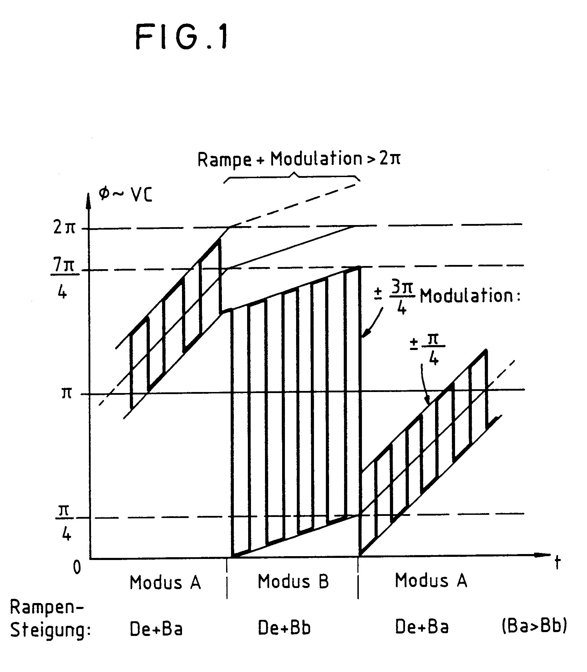

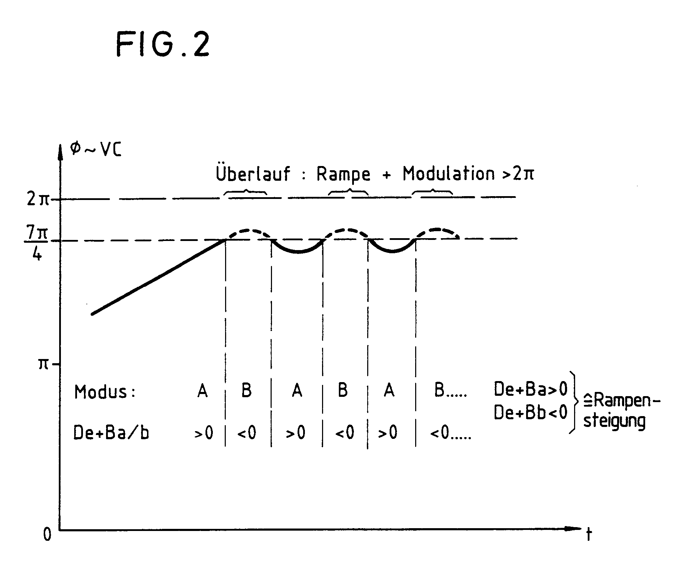

Andererseits tritt der oben erwähnte Lock-in-Effekt in einem Drehratenbereich auf, in dem die Summe ($D_e + B_a$) bzw. ($D_e + B_b$) für beide Modi unterschiedliches Vorzeichen hat, d. h. wenn z. B. gilt ($D_e + B_a$)$> 0$ bzw. ($D_e + B_b$) $< 0$. Dieser für kleine Drehraten durchaus realistische Fall ist in Fig. 2 dargestellt:
Die Rampe des Rückstellsignals (zur besseren Übersichtlichkeit der Darstellung ohne Modulation gezeichnet) beginnt z. B. im Modus A mit positiver Steigung, da ($D_e + B_a$) $> 0$ voraussetzungsgemäß gilt. Erreicht die Rampe den (oberen) Überlaufbereich (Überlaufsignal SL in Fig. I4), so wird auf Modus B gewechselt. Die Regelung steuert dann aber eine negative Rampensteigung an, da jetzt gilt ($D_e + B_b$) $< 0$, d. h. die Rampensteigung wechselt ihr Vorzeichen und verläßt somit den Überlaufbereich und es gilt wieder Modus A. Zu diesem Modus A gehört aber wieder eine positive Rampensteigung, bis wieder nach Modus B umgeschaltet wird usw. Die Regelung hält sich also "gefangen", d. h. die Interferometeranordnung befindet sich im Lock-in-Zustand. Wie schnell die in Fig. 2 dargestellte "Zick-Zack-Rampe" zwischen den Modi A und B an der Überlaufgrenze wechselt, bestimmt die Schnelligkeit der Regelung; diese liegt im allgemeinen sehr hoch. Der Lock-in-Zustand gilt für einen Eingangsdrehratenbereich, in dem die angegebenen Ungleichungen erfüllt sind, d. h. der Lock-in-Bereich hat also eine Breite von $| B_a - B_b |$.

Bei der soweit gegebenen Beschreibung ist mit dem jeweiligen Rampenwert der Momentanwert der (unmodulierten) Rampe $\varphi(t)$ gemeint. Dieser Rampenwert ist proportional zum Drehwinkel und entspricht dem Signal SADD. Die Rampensteigung $d\varphi/dt$ entspricht der zeitlichen Ableitung des Drehwinkels, also der Drehrate. Auf den Punkt gebracht, liegt also die Problematik des bekannten Rampenrückstellverfahrens darin, daß der Rampenwert, d. h. der Wert des Drehwinkels, das Kriterium dafür ist, ob Betriebsmodus A oder B und damit die unterschiedlichen Biases $B_a$ bzw. $B_b$ vorliegen und wegen $B_a \neq B_b$ die Rampensteigung selbst beeinflussen. Die Skalenfaktorfehlerinformation liegt, wie dargestellt, in Form eines Intensitätsänderungssignals vor, dessen Frequenz drehratenproportional ist und sich zwischen 0 und etwa I00 kHz ändern kann, wenn das theoretische Tastverhältnis der Modulationshübe zwischen Modus A und Modus B I:3 beträgt. Dem augenscheinlichen Vorteil, daß die informationstragenden Intensitätsänderungen bei hohen Drehraten öfter vorkommen und somit bei hohen Drehraten eine bessere Skalenfaktorfehlerinformation vorliegt, steht aber entgegen, daß die zugehörige Signalverarbeitungseinrichtung einen vergleichsweise hohen Frequenzbereich verarbeiten muß. Andererseits aber führt das bekannte Rampenrückstellverfahren, wie dargestellt, im Bereich der Drehrate Null zum Fehlen der Skalenfaktorfehlerinformation und damit zu Driftproblemen.

Der Erfindung liegt damit die Aufgabe zugrunde, den Unempfindlichkeitsbereich eines faseroptischen Drehratensensors bei kleinen Drehraten, d. h. den dargestellten "Lock-in-Effekt", zu vermeiden und gut zu verarbeitende Signale zur Regelung des Skalenfaktors zu gewinnen.

Als Vorstufe zur Lösung der dargestellten Aufgabe wurde, wie bereits unter Bezug auf die Fig. I und 2 erläutert, erkannt, daß die automatische drehwinkelabhängige Modulationshubänderung beim Rampenüberlauf die Hauptursache für den Lock-in-Effekt des bekannten Verfahrens, die Skalenfaktornichtlinearität sowie den weiten drehratenabhängigen Frequenzbereich der Skalenfaktorfehlerinformation ist. Damit ist die Erfindung auf das Ziel gerichtet, ein Modulationsverfahren zum Rampenrückstellverfahren zu entwickeln, das einerseits die Modulationshubumschaltung vom Modus A auf den Modus B zur Gewinnung der Skalenfaktorfehlerinformation beinhaltet, andererseits aber diese Umschaltung in einem bestimmten, z. B. festen Takt und nicht mehr drehwinkelabhängig vorzugeben.

Ausgehend von dem bekannten Rampenrückstellverfahren besteht die Erfindung bei einem faseroptischen Sagnac-Interferometer zur Drehratenmessung nach der eingangs genannten Gattung, wie im Oberbegriff des

Patentanspruchs I angegeben, darin, daß zwischen dem digitalen Integrator und dem Digital/Analog-Wandler ein (zweiter) digitaler Addierer angeordnet ist, der an einem zweiten Eingang mit dem in vorgegebenem Takt zwischen den zwei Betriebsmodi umschaltbaren Modulationshubsignal aus einem mit der Frequenz $f_0$ getakteten ersten Pulsgenerator beaufschlagt ist, der So ausgebildet ist, daß er für den ersten Betriebsmodus A ein dem Phasenhub $\pm \pi/4$ entsprechendes Signal und für den zweiten Betriebsmodus B ein dem Phasenhub $\pm 3/4$ $\pi$ entsprechendes Signal an den zweiten Eingang des (zweiten) digitalen Addierers abgibt.

Die Erfindung und vorteilhafte Einzelheiten werden nachfolgend mit weiterem Bezug auf die Zeichnungen in beispielsweisen Ausführungsformen näher erläutert. Es zeigen:

Fig. I die bereits erläuterte, von der Modulationshubänderung, also dem Betriebsmodus abhängige Änderung der Rampensteigung des Rückstellsignals;

Fig. 2 die ebenfalls bereits erläuterte Entstehung des Lock-in-Effekts bei kleinen Drehraten;

Fig. 3 ein erstes Ausführungsbeispiel einer erfindungsgemäßen Interferometeranordnung zur Drehratenmessung;

Fig. 4 eine abgewandelte Ausführungsform der Anordnung nach Fig. 3;

Fig. 5 bis I3 Signalverläufe zur Erläuterung der Arbeitsweise der Schaltungen nach den Fig. 3 und 4; und

Fig. I4 eine bereits erläuterte, dem Stand der Technik entsprechende Anordnung eines faseroptischen Interferometers mit digitaler Verarbeitung des Drehratensignals und Erzeugung der Modulationshubsignale und des Rampenrückstellsignals.

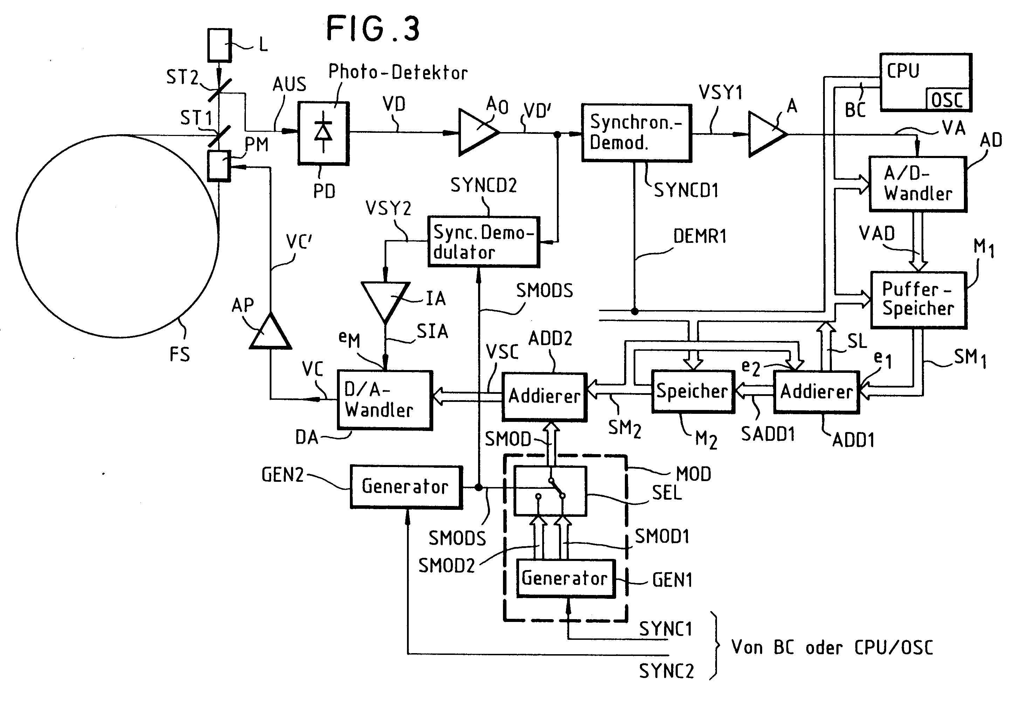

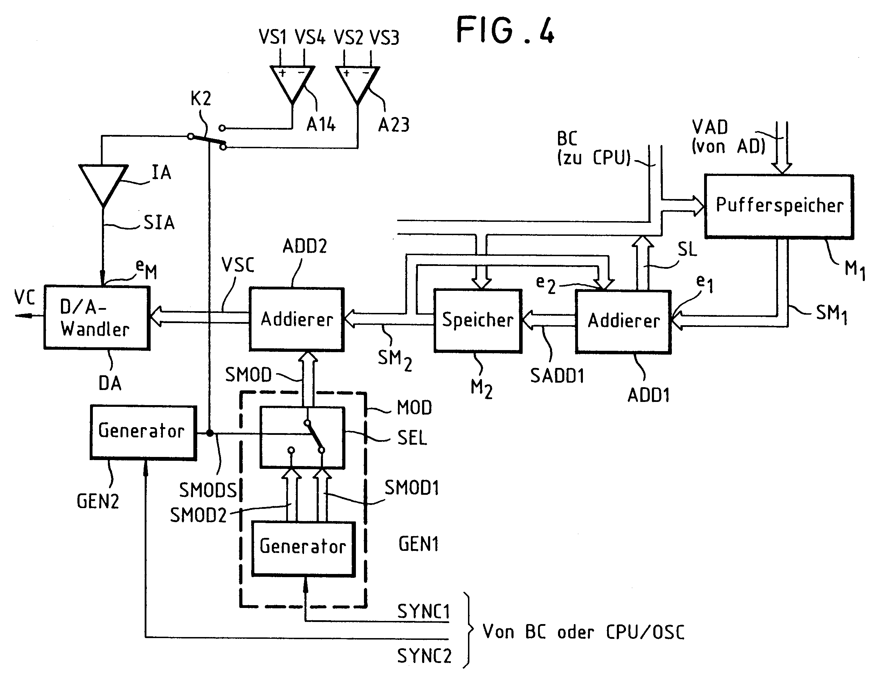

In den Fig. 3 und 4 sind die aus der Erläuterung der Fig. I4 bereits bekannten Anordnungs- und Schaltungsgruppen sowie Signale mit den gleichen Bezugshinweisen gekennzeichnet. Die Beschreibung der dem Leser bereits bekannten Funktionszusammenhänge wird nicht wiederholt. Zunächst wird die Arbeitsweise der Anordnung nach Fig. 3 beschrieben:

Der Photodetektor PD beobachtet die Lichtintensität I des Interferometerausgangssignals und liefert ein entsprechendes Signal VD, das im Verstärker $A_0$ verstärkt wird, zum Signal VD'. Das Lichtintensitätssignal I beinhaltet Informationen über

I) die Regelabweichung der Drehrate, die zu einer Intensitätsänderung $\Delta I_0$ mit der Frequenz $f_0$ führt und die im (ersten) Synchrondemodulator SYNCDI mit Hilfe eines vom Prozessor CPU gelieferten Signals DEMRI gleicher Frequenz detektiert wird, zum Ausgangssignal VSYI. Die Frequenz $f_0$ ist wiederum die Interferometerbetriebsfrequenz, die durch $f_0 = 1/2t_0$ gegeben ist, wobei gilt $t_0 = n \times \ell/c$ mit n = Brechungsindex des Lichtleitermaterials der Faserspule FS, $\ell$ = Lichtweglänge in der Faserspule FS und c = Vakuumlichtgeschwindigkeit;

2) die Regelabweichung des Skalenfaktors, d. h. eine Abweichung des Hubs der Phasenmodulation des elektrooptischen Phasenmodulators PM im Interferometer, die zu einer Intensitätsänderung $\Delta I_I$ führt (vgl. Fig. I2) zwischen den Modulationsmoden A und B mit der Frequenz eines weiter unten näher erläuterten Modulationshubumschaltsignals SMODS, das in einem als zweiter Generator bezeichneten Pulsgenerator GEN2 erzeugt wird, und über ein vom Prozessor CPU geliefertes Signal SYNC2 mit der Kreiselbetriebsfrequenz $f_0$ synchronisiert sein kann. Dieser Intensitätsunterschied $\Delta I_I$ wird in einem (zweiten) Synchrondemodulator SYNCD2 mit Hilfe des Signals SMODS detektiert und es entsteht somit ein Signal VSY2, das ein Maß für den Skalenfaktorfehler ist und über den integrierenden Verstärker IA, wie bereits aus der Schaltung nach Fig. I4 bekannt, einen analogen Stelleingang $e_M$ des Digital/Analog-Wandlers DA beaufschlagt.

Zur besseren Übersichtlichkeit werden nachfolgend zunächst der Drehratenregelkreis und sodann der Skalenfaktorregelkreis erläutert.

Zu I): Drehratenregelkreis

Das einer Regelabweichung des Drehratenregelkreises entsprechende Signal VSYI wird im Verstärker A verstärkt und liefert das Signal VA. Der Verstärker A beinhaltet gleichzeitig ein Filter, das die regelungstechnischen Eigenschaften des gesamten Regelkreises bestimmt und nach bekannten Entwurfsverfahren der Regelungstechnik dimensioniert wird; es wird insoweit auf die bereits mehrfach angesprochene Druckschrift US-A-4 705 399 verwiesen. Praktischerweise wird das Ausgangssignal VA einen Anteil des zeitlichen Integrals des Eingangssignals VSYI aufweisen. Das Signal VA wird im Analog/Digital-Wandler AD digitalisiert und das entstehende Digitalsignal VAD wird im Speicher MI gespeichert, wobei diese Vorgänge über den Bus BC vom Prozessor CPU gesteuert werden. Das Ausgangssignal SMI beaufschlagt, wie bereits bekannt, den Eingang $e_I$ des Addierers, der hier zur besseren Unterscheidung eines weiteren Addierers als erster Addierer ADDI bezeichnet ist. Das Ausgangssignal SADDI des ersten Addierers ADDI wird dem Speicher M2 zugeführt, dessen Ausgangssignal SM2 dem weiteren Eingang $e_2$ des ersten Addierers ADDI zugeführt wird, ganz entsprechend der bekannten Schaltung nach Fig. I4. Der erste Addierer ADDI zusammen mit dem Speicher M2 und der zugeordneten Steuerung über den Bus BC stellt einen Rampensignalgenerator dar, der ein Rampen- oder Stufensignal SM2 erzeugt, dessen Stufenhöhe dem Wert SMI und dessen Stufenbreite der Lichtlaufzeit $t_0$ entspricht.

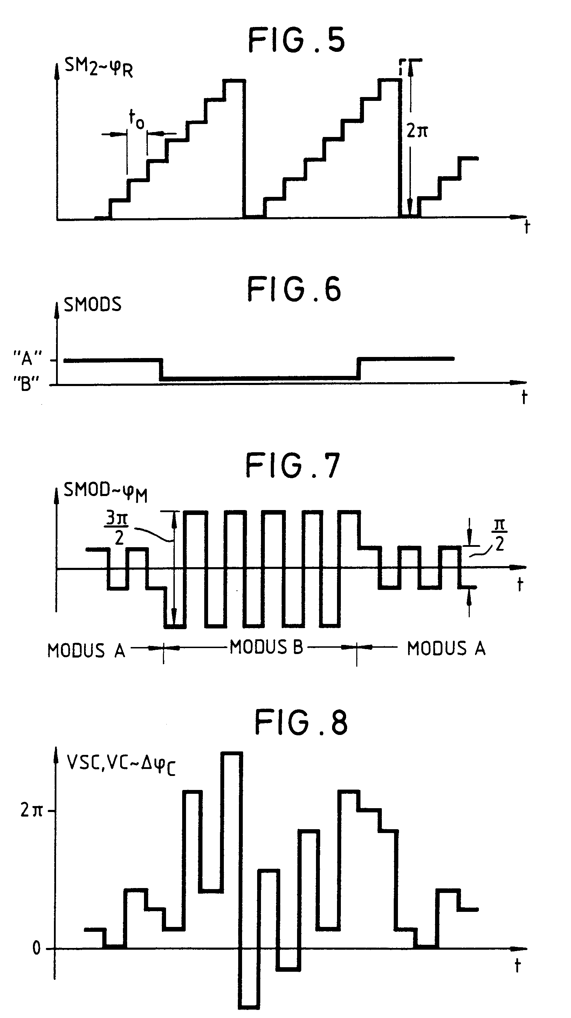

Durch Wortlängenbegrenzung der aus dem ersten Addierer ADDI und dem zweiten Speicher M2 bestehenden digitalen Verarbeitungseinrichtung wird ein Rampenüberlauf des Signals SM2 erreicht, wenn ein bestimmter Ausgangswert des ersten Addierers ADDI überschritten wird, was schematisch in Fig. 5 dargestellt ist. Hierbei können vorteilhaft die Überlaufeigenschaften von digitalen Binärzahlencodes ausgenutzt werden.

Dieses als zweiter Signalanteil SM2 bezeichnete Signal wird - abweichend von der bekannten Schaltung nach Fig. I4 - über noch zu beschreibende elektronische Baugruppen dem optischen Phasenmodulator PM zugeführt und bewirkt eine Phasenverschiebung $\varphi_R$, die durch den erwähnten Überlauf auf einen Phasenbereich von im wesentlichen $2\pi$ beschränkt wird (vgl. Fig. 5).

Erfindungsgemäß wird in einem zweiten Addierer ADD2 ein im wesentlichen rechteckförmiges Modulationssignal SMOD dem Signal SM2 hinzuaddiert, woraus das zusammengesetzte Modulationssignal VSC entsteht. Das Modulationssignal SMOD wird in einem Modulations-Signalgenerator MOD erzeugt und weist die Kreiselfrequenz $f_0$ auf. Über ein Signal SYNCI wird der Modulations-Signalgenerator MOD vom Prozessor CPU bzw. vom Oszillator OSC synchronisiert. Über ein Signal SMODS (vgl. Fig. 6), das dem bereits erwähnten zweiten Pulsgenerator GEN2 entnommen wird, kann die Amplitude des Signals SMOD in weiter unter noch näher erläuterter Weise um den Faktor 3 geändert werden. Der Signalanteil SMOD (vgl. Fig. 7) wird im zweiten Addierer ADD2 zum Signal SM2 hinzuaddiert und nach Analogisierung im Digital/Analog-Wandler DA über den Treiberverstärker AP dem optischen Phasenmodulator PM zugeführt. Dieser Signalanteil SMOD bewirkt dort eine Phasenschiebung $\varphi_M$, die im wesentlichen $\pm \pi/4$ bzw. $\pm 3/4\pi$ beträgt (vgl. Fig. 7). Die Amplitude der Modulation $\varphi_M$ wird also durch das Signal SMODS gesteuert. Der Zustand, währenddessen die Amplitude $\pm \pi/4$ beträgt, wird, wie oben bereits erläutert, "Modus A" genannt, während bei dem größeren Modulationsamplitudenhub von $\pm 3/4 \pi$ der "Modus B" eingestellt ist.

Wie in Fig. 3 dargestellt, kann die Modulationsamplitudenumschaltung beispielsweise so erfolgen, daß in einem Generator GENI zwei Signale SMODI entsprechend dem erläuterten Modus A und SMOD2 entsprechend dem Modus B mit den erläuterten Amplituden erzeugt werden und über einen durch das Signal SMODS gesteuerten Umschalter SEL wechselweise als Signal SMOD den zweiten Eingang des zweiten Addierers ADD2 beaufschlagen.

Die digitale Verarbeitungswortbreite des zweiten Addierers ADD2 ist so ausgelegt, daß das Ausgangssignal VSC stets der Summe der Eingangssignale SM2 bzw. SMOD entspricht, ohne daß ein Überlauf des Ergebnisses auftritt. Das kombinierte Signal VSC (vgl. Fig. 8) wird in bereits erläuterter Weise dem Digital/Analog-Wandler DA zugeführt und in das Spannungssignal VC gewandelt und zum Signal VC' verstärkt, dessen Wert im wesentlichen dem Zahlenwert des Signals VSC proportional ist. Die Spannung VC' bewirkt im optischen Phasenmodulator PM eine Phasenverschiebung $\Delta\varphi_C$ (siehe wiederum Fig. 8).

Der gemäß Fig. 3 erfindungsgemäß abgewandelten Schaltung liegt also folgendes Prinzip zugrunde: Der unmodulierte digitale Rampenwert wird durch Abschneiden oberhalb des Bits der Wertigkeit $\pi$ auf den Phasenwinkelbereich $2\pi$ bzw. $\pm\pi$ begrenzt. In dem zweiten Addierer ADD2 wird dieser beschränkten Rampe ein im ersten Pulsgenerator GENI, SEL bzw. MOD erzeugtes Rechtecksignal hinzuaddiert, das die Modulationsfrequenz $f_0$ besitzt, aber in der Amplitude entsprechend einem Phasenwinkelwert von $\pm \pi/4$ (Modus A) und $\pm 3/4\pi$ (Modus B) umschaltbar ist. Diese Umschaltung wird durch den zweiten Pulsgenerator GEN2 gesteuert, dessen Frequenz und Tastverhältnis frei wählbar ist. Die Umschaltwerte können vom Prozessor CPU fest vorgegeben sein oder drehratenabhängig gesteuert werden, wobei eine Synchronisation mit der Modulationsfrequenz $f_0$ sinnvoll ist.

Das in Fig. 8 dargestellte modulierte Rampensignal, das dem Phasenmodulator PM zugeführt wird, läßt über das Interferometer an dessen Ausgang ein Intensitätssignal I(t) entstehen, das im wesentlichen folgender Beziehung genügt:

$$I(t) \sim \cos(\Delta\varphi(t) + \Delta\varphi_0(t))$$

wobei $\Delta\varphi(t) = \Delta\varphi_c(t) - \Delta\varphi_c(t-t_0)$ gilt; $\Delta\varphi_c(t)$ ist die Phasenverschiebung am Phasenmodulator PM und $\Delta\varphi_0(t)$ die drehratenproportionale Sagnac-Phasenverschiebung, die durch

$$\Delta\varphi_0 = \frac{2\pi \cdot \ell \cdot D}{\lambda \cdot C} \cdot \Omega$$

gegeben ist. Darin ist mit $\ell$ die Länge und mit D der mittlere Durchmesser des Lichtwegs in der Faserspule FS, mit $\lambda$ die Wellenlänge des verwendeten Lichts, mit c die Vakuumlichtgeschwindigkeit und mit $\Omega$ die Drehrate bezeichnet.

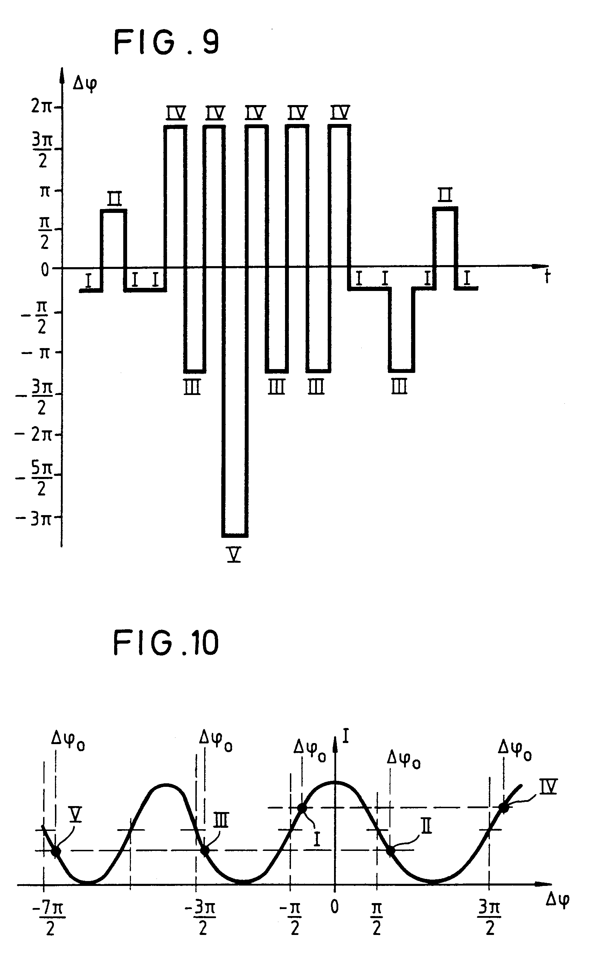

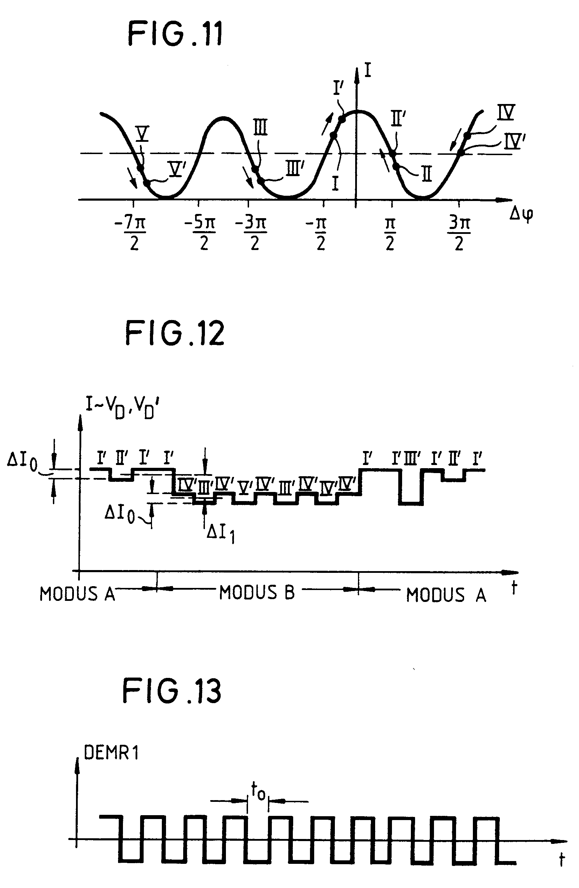

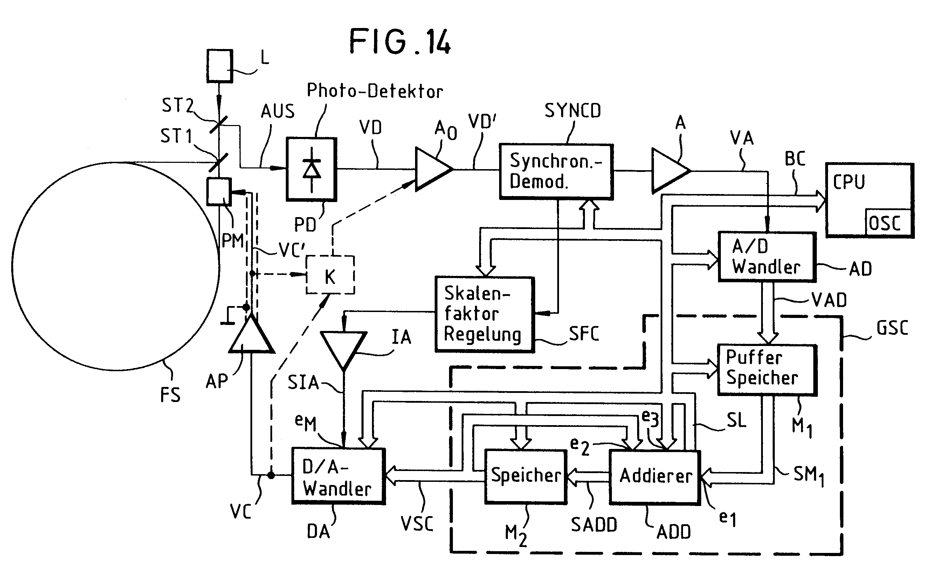

Das Signal $\Delta\varphi(t)$ ist in Fig. 9 dargestellt. Den sich ergebenden Intensitätsverlauf in Abhängigkeit von $\Delta\varphi(t)$ und $\Delta\varphi_0(t)$ gibt die Fig. I0 wieder. Wie sich aus diesen beiden Figuren erkennen läßt, führt die drehratenproportionale Phasenverschiebung $\Delta\varphi_0(t)$ dazu, daß die Intensität I in den Zeitabschnitten "I" und "IV" steigt und in den Zeitabschnitten "II", "III" bzw. "V" sinkt. Der resultierende zeitliche Intensitätsverlauf I(t) ist in Fig. I2 dar-

gestellt.

Der Intensitätsunterschied $\Delta I_0$ wird, wie oben erwähnt, mit Hilfe des ersten Synchrondemodulators SYNCDI detektiert und dient zur Regelung der Rampensteigung des Signals $\varphi_R$ (vgl. Fig. 5), womit der Effekt von $\Delta\varphi_0$ durch den Mittelwert der Phasenverschiebung $\Delta\varphi$, der gleichen Betrag, aber unterschiedliches Vorzeichen aufweist, kompensiert wird. Für die Intensität I(t) gilt dann:

$$I(t) \sim \cos(\Delta\varphi(t) + \Delta\varphi_0(t)) = const.$$

Daraus folgt, daß die Rampensteigung von $\varphi_R$ ein Maß für die Drehrate ist.

Vorteilhaft kann es sein, statt der Drehrate $\varphi_R$ den Drehwinkel als deren Integral auszulesen. Dies kann beispielsweise dadurch erfolgen, daß die erwähnten Überläufe des Rampensignals SM2 am Ausgang des zweiten Speichers M2 bzw. des Ausgangssignals SADDI des ersten Addierers ADDI gezählt werden. Ein Überlauf und daraus resultierend ein Rücksprung im Phasenwinkel $\varphi_R$ um $2\pi$ entspricht dabei einem Winkelinkrement $\alpha$ von

$$\alpha = \frac{\lambda \cdot n}{D}$$

Bei Verwendung eines Interferometers mit einem Faserspulen-Durchmesser D = 6 cm beträgt der erwähnte Winkelinkrementwert $\alpha$ etwa 4 Winkelsekunden. Diese Überlaufinformation kann beispielsweise vom ersten Addierer ADDI über dessen Überlauf-Ausgangssignal SL und den Bus BC an den Prozessor CPU gegeben werden, der die Winkelinkremente zählt (aufsummiert).

Zu 2: Skalenfaktorregelkreis

Wie oben erläutert, ist das Ausgangssignal VSY2 des zweiten Synchrondemodulators SYNCD2 ein Maß für den Skalenfaktorfehler. Dieses Fehlersignal beaufschlagt den integrierenden Verstärker IA, der ein Filter darstellt, das nach regelungstechnischen Gesichtspunkten dimensioniert wird und die regelungstechnischen Eigenschaften der Skalenfaktorregelung bestimmt. Das Ausgangssignal SIA enthält zumindest einen Anteil der dem zeitlichen Integral des Eingangssignal VSY2 entspricht. Das Signal SIA wird, wie auch bei der bekannten Schaltung nach Fig. I4, dem Eingang $e_M$ des Digital/Analog-Wandlers DA zugeführt. Der Digital/Analog-Wandler DA läßt sich als multiplizierender Digital/Analog-Wandler bezeichnen, d. h. seine Ausgangsgröße VC ist im wesentlichen proportional zum Produkt der beiden Signale VSC (digital) und SIA (analog). Mit Hilfe der Intensitätsunterschiedsinformation $\Delta I_I$ (Fig. I2) wird also der Spannungshub des Signals VC derart geregelt, daß der Modulationsphasenhub am optischen Phasenmodulator PM genau $\pm \pi/4$ (Modus A) bzw. $\pm 3/4\pi$ (Modus B) beträgt. Damit ist gleichzeitig sichergestellt, daß der überlaufbedingte Rücksprung der Phase $\varphi_R$ (vgl. Fig. 5) genau $2\pi$ entspricht.

In Fig. II ist dargestellt, wie bei vorliegenden Skalenfaktorfehler - hier beispielsweise der Art, daß die optische Phasenschiebung kleiner als gewünscht vorliegt - sich die intensitätsverlaufbestimmenden Arbeitspunkte I, II, III, IV bzw. V zu den Arbeitspunkten I', II', III', IV', V' verschieben und somit die erwähnte Intensitätsänderung $\Delta I_I$ (Fig. I2) entsteht. Durch Zuführen des entsprechenden Korrektursignals SIA an den Eingang $e_M$ des Digital/Analog-Wandlers DA wird die Ausgangsamplitude des Signals VC und somit die optische Phasenschiebung so erhöht, daß wieder die gewünschten Arbeitspunkte I, II, III, IV, V erreicht werden und die Intensitätsänderung $\Delta I_I$ zu Null wird.

Der Vollständigkeit halber zeigt die Fig. I3 noch das dem ersten Synchrondemodulator SYNDI über den Bus BC zuzuführende Synchronisationssignal DEMRI.

Die in Fig. 4 dargestellte (Teil-)Schaltung entspricht in ihrer Wirkungsweise derjenigen nach Fig. 3 vollkommen. Unterschiedlich ist lediglich der zweite Synchrondemodulator, der hier - analog zur Fig. I4 der Druckschrift US-A-4 705 399 - durch zwei Differenzverstärker AI4 bzw. A23 gebildet ist, die in nicht näher dargestellter Weise an ihren Plus-bzw. Minuseingängen durch die Signale VSI, VS2 bzw. VS4, VS3 von vier Abtast-Halteschaltungen beaufschlagt sind. Unterschiedlich zu der bekannten Schaltung ist jedoch, daß der ausgangsseitige Umschalter K2, über den letztlich das Intensitätsänderungssignal den integreierenden Verstärker IA beaufschlagt, durch das frei wählbare, jedoch festgelegte Ausgangssignal SMODS des zweiten Pulsgenerators GEN2 gesteuert wird, also im Takt der fest vorgegebenen Modus-bzw. Modulationshubumschaltung.

Bei der erfindungsgemäß abgewandelten Schaltung beispielsweise nach den Fig. 3 bzw. 4 bewirkt eine Einstreuung des unterschiedlichen Modulationshubs zwar weiterhin eine Biasänderung. Diese ist jedoch nicht mehr drehratenabhängig, vielmehr ist ihr Wert konstant und entspricht dem tastverhältnismäßig gewichteten Mittelwert der Bias-Werte beider Modulationshübe. Da die Frequenz und das Tastverhältnis, mit der die Modulationshubänderung gesteuert wird und mit der die Skalenfehlerinformation anfällt, in weiten Grenzen frei wählbar und vor allem bekannt sind, kann die Skalenfaktorregelung auf eine feste Frequenz optimiert werden.

Gegenüber den bekannten Realisierungen für einen faseroptischen inertialen Drehratensensor mit digitaler Phasenrampenrückstellung bietet die Erfindung den entscheidenden Vorteil, daß der beschriebene Lock-

EP 0 436 052 B1

in-Effekt und die damit zusammenhängende Skalenfaktornichtlinearität vermieden werden sowie günstiger zu verarbeitende Signale zur Skalenfaktorregelung vorliegen.

Die bisher für erforderlich gehaltenen EMV-Aufwendungen für die Kreiselelektronik lassen sich zumindest zum Teil vermeiden.

Der erforderliche Schaltungsmehraufwand im Digitalteil der Regelungselektronik ist vergleichsweise gering und fällt bei Verwendung moderner integrierter Schaltkreise nicht ins Gewicht.

Da der Aussteuerbereich des Phasenmodulators PM geringfügig erhöht wird, erfordert dies auch eine etwas höhere Aussteuerbarkeit der analogen Treiberbauelemente sowie eine Erhöhung der Auflösung des Digital/Analog-Wandlers DA um I Bit. Dieser geringe Mehraufwand ist jedoch im Hinblick auf die erheblichen praktischen Vorteile der erfindungsgemäßen Realisierung unerheblich.

Wenn und soweit bei den obigen Ausführungen sowie in den nachfolgend angegebenen Patentansprüchen von der Grundoder Interferometerbetriebsfrequenz $f_0 = 1/2t_0$ ausgegangen wird, so sei ausdrücklich erwähnt, daß die erfindungsgemäße Drehratenmeßvorrichtung auch mit geringfügig verstimmter Frequenz betriebsfähig ist.

Im Rahmen der Erfindung kann und wird der Zentralprozessor (CPU) in der Regel durch einen marktgängigen Mikroprozessor verwirklicht sein. Möglich ist ohne Abweichung vom Erfindungsgedanken auch eine Realisierung in "hartverdrahteter" Logik.

## Patentansprüche

I. Faseroptisches Sagnac-Interferometer zur Drehratenmessung, bei dem
– zwei aus einer Lichtquelle (L) stammende, durch Strahlteilung (STI) erzeugte Lichtstrahlen in entgegengesetzten Richtungen in eine Faserspule (FS) eingestrahlt und anschließend wiedervereinigt werden,
– das entstehende Interferenzbild eine Detektoreinrichtung (PD) beaufschlagt, deren Ausgangssignal (VD) der Lichtintensität des Interferenzbilds entspricht,
– die beiden Lichtstrahlen mittels eines in der Faserspule liegenden Phasenmodulators (PM) durch ein periodisches, aus mehreren variablen Signalanteilen zusammengesetztes Rechtecksignal mit Grundfrequenz $f_0 = 1/2t_0$, wobei $t_0$ der Laufzeit jedes der Lichtstrahlen durch die Faserspule (FS) entspricht, moduliert werden, wobei
-- ein erster Signalanteil bei periodischem Modulationshubwechsel zwischen zwei Betriebsmodi (A, B) im Takt der Frequenz $f_0$ eine reziproke alternierende Phasenverschiebung ($\varphi_M$) der beiden gegenläufigen Lichtstrahlen bewirkt, und
-- ein zweiter Signalanteil ein stufenförmiges Rampensignal ist, dessen Stufen jeweils eine der Laufzeit $t_0$ bzw. ganzzahligen Vielfachen von $t_0$ entsprechende Dauer und Amplitudeninkremente aufweisen, welche nichtreziproke inkrementale Phasenverschiebungen der beiden Lichtstrahlen kompensieren,
– das verstärkte Photodetektorausgangssignal (VD') einem mit der Frequenz $f_0$ getakteten ersten Synchrondemodulator (SYNCDI) zugeführt wird,
– das demodulierte und verstärkte Ausgangssignal (VA) einem Analog/Digital-Wandler (AD) zugeführt und nach Digitalisierung in einem digitalen Integrator ($M_I$, ADDI, M2) integriert und über einen Digital/Analog-Wandler (DA) und einen Treiberverstärker (AP) den Phasenmodulator (AM) beaufschlagt, um nicht-reziproke Phasenverschiebungen der Lichtstrahlen durch den zweiten Signalanteil zu kompensieren,
– eine Skalenfaktor-Korrekturschaltung vorgesehen ist, die das verstärkte Photodetektor-Ausgangssignal (VD') im Takt der Modusumschaltung demoduliert und über einen integrierenden Verstärker (IA) ein analoges Skalenfaktor-Korrektursignal (SIA) an den Digital/Analog-Wandler (DA) abgibt und bei dem
– ein Prozessor (CPU) die Steuer- und Synchronisationssignale für den ersten Synchrondemodulator (SYNCDI), den Analog/Digital-Wandler (AD) und den digitalen Integrator (MI, ADDI, M2) liefert,
**dadurch gekennzeichnet**, daß
– zwischen dem digitalen Integrator (MI, ADDI, M2) und dem Digital/Analog-Wandler (DA) ein digitaler Addierer (ADD2) angeordnet ist, der an einem zweiten Eingang mit dem in vorgegebenem Takt zwischen den zwei Betriebsmodi (A bzw. B) umschaltbaren Modulationshubsignal aus einem mit der Frequenz $f_0$ getakteten ersten Pulsgenerator (GENI) beaufschlagt ist, der So ausgebildet ist, daß er für den ersten Betriebsmodus (A) ein dem Phasenhub $\pm \pi/4$ entsprechendes Signal und für den zweiten Betriebsmodus (B) ein dem Phasenhub $\pm 3\pi/4$ entsprechendes Signal an den zweiten Eingang des digitalen Addierers (ADD2) abgibt.

2. Interferometer nach Anspruch I, **gekennzeichnet durch** einen zwischen dem ersten Pulsgenerator (GENI) und dem zweiten Eingang des digitalen Addierers (ADD2) liegenden Umschalter (SEL), der durch einen zweiten Pulsgenerator (GEN2) im Takt der Betriebsmodusumschaltung derart betätigt wird, daß im ersten Betriebsmodus (A) das dem Phasenhub $\pm \pi/4$ und im zweiten Betriebsmodus (B) das dem Phasenhub $\pm 3\pi/4$ entsprechende Pulssignal auf den zweiten Eingang des digitalen Addierers (ADD2) gelangt.

3. Interferometer nach Anspruch 2, **dadurch gekennzeichnet**, daß die Schaltfrequenz und das Taktverhältnis des zweiten Pulsgenerators (GEN2) frei wählbar sind.

4. Interferomter nach Anspruch 2, **dadurch gekennzeichnet**, daß das Tastverhältnis und/oder die Frequenz des zweiten Pulsgenerators (GEN2) drehratenabhängig steuerbar ist.

5. Interferometer nach Anspruch 2, **dadurch gekennzeich net**, daß das Tastverhältnis und/oder die Frequenz des zweiten Pulsgenerators (GEN2) mit der Modulationsfrequenz $f_0$ synchronisiert ist.

6. Interferometer nach einem der vorstehenden Ansprüche, **dadurch gekennzeichnet**, daß das Ausgangssignal des zweiten Pulsgenerators (GEN2) das Taktsignal für den das Skalenfaktor-Korrektursignal liefernden Demodulator (SYNCD2) ist.

## Claims

1. A fiber optic Sagnac interferometer for measurement of rate of rotation, in which
   – two light beams originating from a light source (L) and generated by beam splitting (ST1) are irradiated into a fiber coil (FS) in opposite directions and subsequently reunited,
   – the interference pattern produced is applied to a detector device (PD) whose output signal (VD) corresponds to the light intensity of the interference pattern,
   – with the aid of a phase modulator (PM) located in the fiber coil the two light beams are modulated by a periodic rectangular signal combined from a plurality of variable signal components and having the fundamental frequency $f_0 = 1/2t_0$, where to corresponds to the transit time of each of the light beams through the fiber coil (FS),
      -- in conjunction with periodic change in the modulation deviation a first signal component effecting between two operating modes (A, B) in time with the frequency $f_0$ a reciprocal alternating phase shift $(\varphi_M)$ of the two counter-rotating light beams, and
      -- a second signal component being a stair-step ramp signal whose risers each have a duration, corresponding to the transit time $t_0$ or integral multiples of $t_0$, and amplitude increments which compensate nonreciprocal incremental phase shifts of the two light beams,
   – the amplified photodetector output signal (VD') is fed to a first synchronous demodulator (SYNCD1) clocked with the frequency $f_0$,
   – the demodulated and amplified output signal (VA) is fed to an analog-to-digital converter (AD) and after digitization integrated in a digital integrator ($M_1$, ADD1, M2) and is applied to the phase modulator (AM) via a digital-to-analog converter (DA) and a driver amplifier (AP), in order to compensate nonreciprocal phase shifts of the light beams by means of the second signal component,
   – a scale factor correction circuit is provided which demodulates the amplified photodetector output signal (VD') in time with the mode reversal and transmits an analog scale factor correction signal (SIA) to the digital-to-analog converter (DA) via an integrating amplifier (IA), and in which
   – a processor (CPU) supplies the control and synchronization signals for the first synchronous demodulator (SYNCD1), the analog-to-digital converter (AD) and the digital integrator (M1, ADD1, M2), wherein
   – between the digital integrator (M1, ADD1, M2) and the digital-to-analog converter (DA) there is arranged a digital adder (ADD2) to which at a second input the modulation deviation signal that can be reversed with the predetermined timing between the two operating modes (A or B) is applied from a first pulse generator (GEN1) that is clocked with the frequency $f_0$ and is set up to transmit to the second input of the digital adder (ADD2) a signal corresponding to the phase deviation $\pm\pi/4$ for the first operating mode (A) and a signal corresponding to the phase deviation $\pm3\pi/4$ for the second operating mode (B).

2. The interferometer as claimed in claim 1, comprising a changeover switch (SEL), which is located between the first pulse generator (GEN1) and the second input of the digital adder (ADD2) and is actuated by a second pulse generator (GEN2) in time with the operating mode reversal in such a way that the pulse signal passes to the second input of the digital adder (ADD2), which pulse signal corresponds in the first operating mode (A) to the phase deviation $\pm\pi/4$ and in the second operating mode (B) to the phase deviation $\pm3\pi/4$.

3. The interferometer as claimed in claim 2, wherein the operating frequency and the pulse-duty factor of the second pulse generator (GEN2) are freely selectable.

4. The interferometer as claimed in claim 2, wherein the pulse-duty factor and/or the frequency of the second pulse generator (GEN2) can be controlled as a function of the rate of rotation.

5. The interferometer as claimed in claim 2, wherein the pulse-duty factor and/or the frequency of the second pulse generator (GEN2) is synchronized with the modulation frequency $f_0$.

6. The interferometer as claimed in one of the preceding claims, wherein the output signal of the second pulse generator (GEN2) is the clock signal for the demodulator (SYNCD2) that supplies the scale factor correction signal.

**Revendications**

1. Interféromètre de Sagnac à fibres optiques pour la mesure de la vitesse de rotation, dans lequel
   – deux rayons lumineux, provenant d'une source lumineuse (L) et produits par séparation du faisceau (ST1), sont dirigés dans des directions opposées dans un bobinage de fibres (FS), puis à nouveau réunis,
   – l'image interférentielle ainsi obtenue sollicite un dispositif détecteur (PD), dont le signal de sortie (VD) correspond à l'intensité lumineuse de l'image interférentielle,
   – les deux rayons lumineux sont, au moyen d'un modulateur de phase (PM) se trouvant dans le bobinage de fibres, modulés par un signal rectangulaire périodique, composé de plusieurs parties de signal variables et de fréquence de base $f_0 = \frac{1}{2}t_0$, $t_0$ correspondant au temps de passage de chacun des rayons lumineux à travers le bobinage de fibres (FS),
       -- une première partie de signal produisant, lors de la commutation périodique de la course de modulation entre deux modes d'exploitation (A, B), à la cadence de la fréquence $f_0$, un déphasage réciproque alternatif ($\varphi_M$) des deux rayons lumineux opposés, et
       -- une seconde partie de signal étant un signal de rampe échelonné, dont les échelons présentent chacun un incrément de durée et d'amplitude correspondant au temps de passage $t_0$ ou à des multiples entiers de $t_0$, ces incréments compensant les déphasages incrémentiels non réciproques des deux rayons lumineux,
   – le signal de sortie amplifié du photo-détecteur (VD′) est fourni à un premier démodulateur synchrone (SYNCD1), cadencé à la fréquence $f_0$,
   – le signal de sortie démodulé et amplifié (VA) est fourni à un convertisseur analogique-numérique (AD) et, après numérisation, intégré dans un intégrateur numérique (M1, ADD1, M2) et, en passant par un convertisseur numérique-analogique (DA) et un amplificateur excitateur (AT), il sollicite le modulateur de phase (AM) afin de compenser, par la seconde partie de signal, des déphasages non réciproques des rayons lumineux,
   – un montage correcteur de facteur d'échelle est prévu, qui démodule le signal de sortie amplifié du photodétecteur (VD′) à la cadence de la commutation de mode et délivre, par l'intermédiaire d'un amplificateur intégrateur (IA), un signal de correction de facteur d'échelle analogique (SIA) au convertisseur numérique-analogique (DA), et
   – un processeur (CPU) fournit les signaux de commande et de synchronisation pour le premier démodulateur synchrone (SYNCD1 ), le convertisseur analogique-numérique (AD) et l'intégrateur numérique (M1, ADD1, M2),
   **caractérisé** en ce qu'un additionneur numérique (ADD2) est disposé entre l'intégrateur numérique (M1, ADD1, M2) et le convertisseur numérique-analogique (DA) et il est sollicité, à une seconde entrée, par le signal d'amplitude de modulation qui peut être commuté à une cadence allouée entre les deux modes d'exploitation (A ou B) et qui provient d'un premier générateur d'impulsions (GEN1), cadencé à la fréquence $f_0$ et conçu de telle sorte qu'il délivre, à la seconde entrée de l'additionneur numérique (ADD2 ), un signal correspondant à l'amplitude de déphasage ± $\pi/4$ pour le premier mode d'exploitation (A) et un signal correspondant à l'amplitude de déphasage ± $3\pi/4$ pour le second mode d'exploitation (B).

2. Interféromètre selon la revendication 1, **caractérisé** par un commutateur (SEL) qui se trouve entre le premier générateur d'impulsions (GEN1) et la seconde entrée de l'additionneur numérique (ADD2) et qui est actionné, par un second générateur d'impulsions (GEN2) et à la cadence de la commutation de mode d'exploitation, de telle sorte que le signal d'impulsions correspondant à l'amplitude de déphasage ± $\pi/4$ dans le premier mode d'exploitation (A), et le signal d'impulsions correspondant à l'amplitude de déphasage ± $3\pi/4$ dans le second mode d'exploitation (B), atteint la seconde entrée de l'additionneur numérique (ADD2).

3. Interféromètre selon la revendication 2, **caractérisé** en ce que la fréquence et le taux d'impulsions du second générateur d'impulsions (GEN2) peuvent être librement choisis.

4. Interféromètre selon la revendication 2, **caractérisé** en ce que le taux d'impulsions et/ou la fréquence du second générateur d'impulsions (GEN2) peuvent être commandés en fonction de la vitesse de rotation.

5. Interféromètre selon la revendication 2, **caractérisé** en ce que le taux d'impulsions et/ou la fréquence du second générateur d'impulsions (GEN2) sont synchronisés avec la fréquence de modulation $f_0$.

6. Interféromètre selon l'une des revendications précédentes, **caractérisé** en ce que le signal de sortie du second générateur d'impulsions (GEN2) est le signal de cadence pour le démodulateur (SYNCD2) fournissant le signal de correction de facteur d'échelle.

# FIG.1

Rampe + Modulation > 2π

$\phi \sim VC$

$2\pi$

$\dfrac{7\pi}{4}$

$\pm \dfrac{3\pi}{4}$ Modulation:

$\pi$

$\pm \dfrac{\pi}{4}$

$\dfrac{\pi}{4}$

0     t

| | Modus A | | Modus B | | Modus A | |
|---|---|---|---|---|---|---|

Rampen-
Steigung:    De+Ba      De+Bb      De+Ba     (Ba>Bb)

13

FIG.2

FIG.3

FIG.4

# FIG.5

$SM_2 \sim \varphi_R$

$t_o$

$2\pi$

t

# FIG.6

SMODS

"A"

"B"

t

# FIG.7

$SMOD \sim \varphi_M$

$\frac{3\pi}{2}$

$\frac{\pi}{2}$

t

MODUS A ——|—— MODUS B ——|—— MODUS A

# FIG.8

$VSC, VC \sim \Delta\varphi_C$

$2\pi$

0

t

# FIG. 9

# FIG. 10

EP 0 436 052 B1

# FIG.11

# FIG.12

# FIG.13

19

FIG.14